# EUROPEAN PATENT APPLICATION

(11) **EP 3 106 215 A1**
(43) Date of publication of application: **21.12.2016**
(21) Application number: 16172916.5
(22) Date of filing: 03.06.2016
(51) Int. Cl.: B01D 46/00, B01D 46/04, B01D 46/02

(54) **FABRIC FILTER AND METHOD FOR CLEANING A FABRIC FILTER**

(30) Priority: 17.06.2015 US 201514742042
(71) Applicant: General Electric Technology GmbH, 5400 Baden (CH)
(72) Inventor: MOESTAM, Per Robert, Knoxville, TN Tennessee 37932-1962 (US); APPELO, Per-Erik Albert, Knoxville, TN Tennessee 37932-1962 (US)
(74) Representative: General Electric Technology GmbH

(57) **Abstract**

The fabric filter (1) includes a first chamber (2) with an inlet (3), a second chamber (4) with an outlet (5), filter bags (9) housed in the first chamber (2) and having mouths (11) that open in the second chamber (4) and defining at least a bag nest (12), manifolds (13) with nozzles (14) facing the mouths (11) and housed in the second chamber (4), a flow direction (15) along which during operation a dirty gas to be treated in the fabric filter (1) enters the bag nest (12). Angles between the manifolds (13) and the gas flow direction (15) are bigger than 45 degree.

## Description

### TECHNICAL FIELD

The present invention relates to a fabric filter and method for cleaning a fabric filter. The fabric filter is a large fabric filter used e.g. in power plants or industrial applications for removing dust or solid particles from a gas.

### BACKGROUND

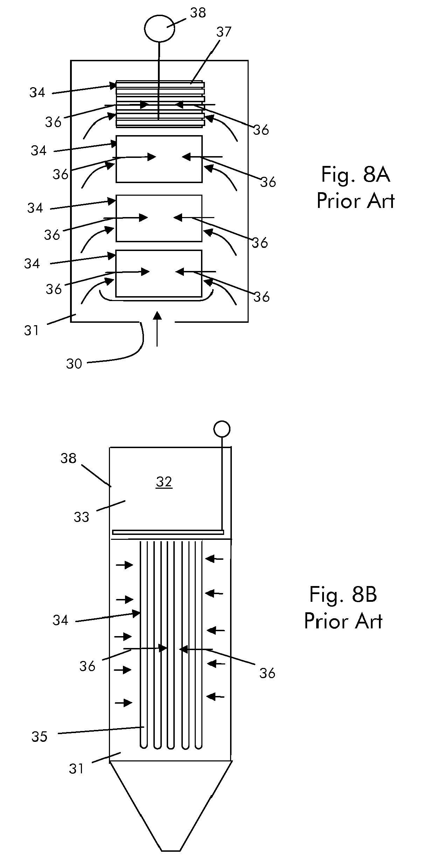

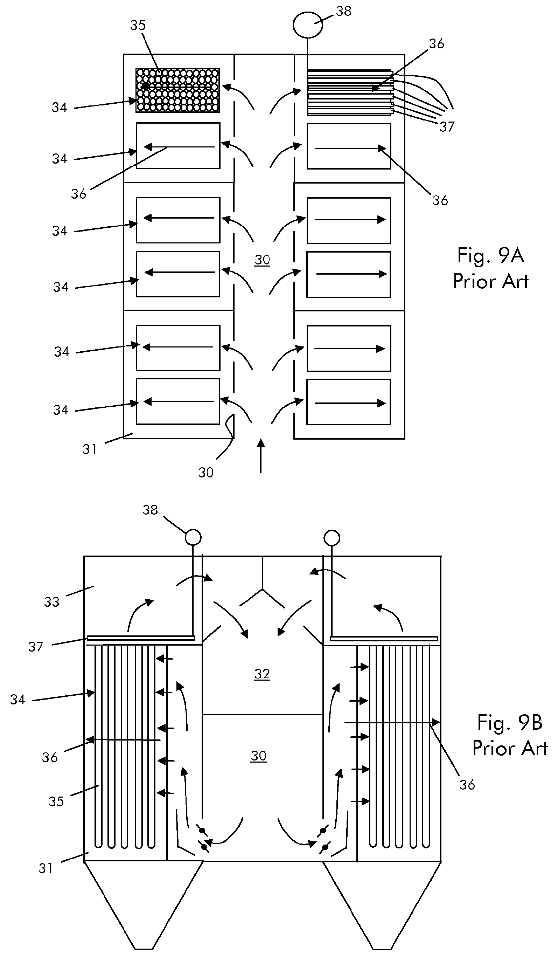

The attached figures 8A, 8B show a traditional medium size fabric filter and figures 9A, 9B show a traditional very large size fabric filter.

These fabric filters have an inlet 30 for a dirty gas to be treated connected to first chambers 31 and an outlet 32 for the treated, clean gas connected to second chambers 33.

In the first chambers 31 nests 34 of filter bags 35 are provided; e.g. each nest 34 can have tens, hundreds or even thousands of filter bags 35, according to the application.

During operation the dirty gas enters the first chambers 31 and moves through the first chambers 31 over a dirty gas direction 36. The dirty gas passes through the filter bags 35 and enters the filter bags 35 and clean gas is discharged into the second chambers 33 through the mouths of the filter bags 35.

The filter bags 35 have to be periodically cleaned. In order to clean the filter bags 35, it is usual practice to provide the fabric filter with manifolds 37 that are connected to pressure tanks 38; the manifolds 37 have nozzles facing the mouths of the filter bags 35. The manifolds 37 have an elongated shape and are parallel to the dirty gas direction 36 (i.e. the manifolds 37 extend over a direction parallel to the dirty gas direction 36).

This configuration has some disadvantages.

In fact, when the filter bags associated to a manifold are cleaned, they cause a reduced resistance to the dirty gas flow (i.e. the dirty gas flow passing in correspondence of the clean filter bags undergoes a lower pressure drop). The consequence is a high dirty gas flow and higher dirty gas velocity in correspondence of the clean filter bags.

This increased velocity can be detrimental for the filter bags lifetime, because the dirty gas is often abrasive because of the material drawn by it. Moreover, since the filter bags are clean, i.e. there is no dust cake around the filter bags to protect them, the risk of abrasion is increased.

In addition, after cleaning the filter bags associated to a manifold, an increase of the emission could occur. In fact, after cleaning the filter bags associated to a manifold, the clean filter bags do not have a dust cake around them. The dust cake helps filtering in particular the fine dust. Therefore after cleaning the filter bags an increase of the emission is possible because the dust cake that contributes to filter the fine dust has been removed from the filter bags.

### SUMMARY

An aspect of the invention includes providing a fabric filter and a method that counteract the risk of damaging of the filter bags following their cleaning.

Another aspect of the invention includes providing a fabric filter and a method that counteract the possible emission increase that could follow the filter bag cleaning.

These and further aspects are attained by providing a fabric filter and a method in accordance with the accompanying claims.

### BRIEF DESCRIPTION OF THE DRAWINGS

Further characteristics and advantages will be more apparent from the description of a preferred but non-exclusive embodiment of the fabric filter and method, illustrated by way of non-limiting example in the accompanying drawings, in which:

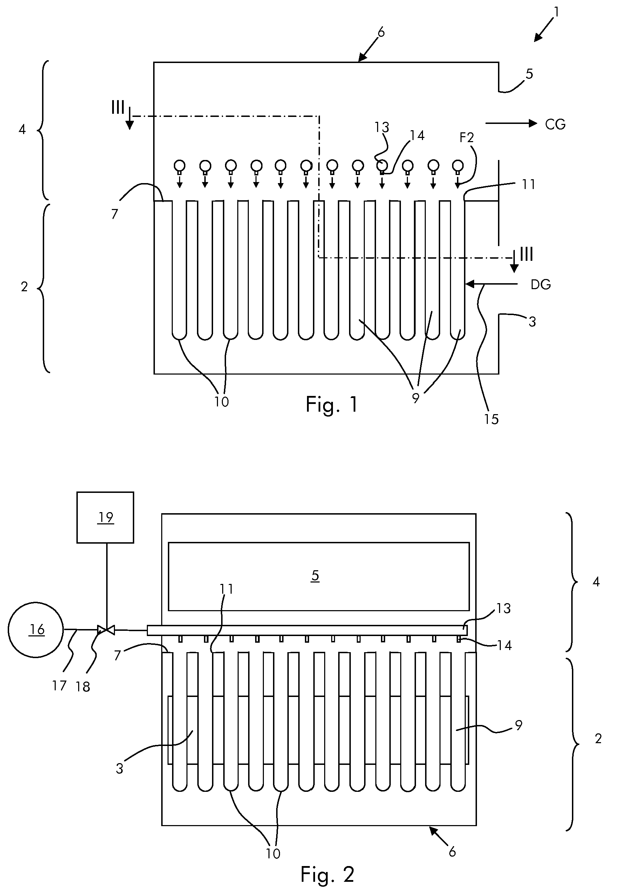

Figures 1 through 3 shows a fabric filter in an embodiment of the invention; figure 3 is a cross section over line III-III of figure 1;
Figure 4 shows a particular of a filter bag,
Figures 5 - 7 show different embodiments of filter bags matrix configurations; for clarity these figures show only one manifold, but a manifold is associated to each raw of filter bags;
Figure 7A schematically shows the relationship between a manifold and a flow direction;
Figures 8A and 8b show a fabric filter according to the prior art; the nests and manifolds are only partly shown, it is clear that each first chamber has one or more nest of filter bags and manifolds connected to a pressure tank;
Figures 9A and 9b show another fabric filter according to the prior art; also in this example the nests and manifolds are only partly shown, it is clear that each first chamber has one or more nest of filter bags and manifolds connected to a pressure tank.

### DETAILED DESCRIPTION

With reference to the figures, these show a fabric filter 1 comprising a first chamber 2 with an inlet 3 (side inlet) and a second chamber 4 with an outlet 5. In the embodiment shown, the first and second chambers 2, 4 are defined within a casing 6 having an internal wall 7; other embodiments are naturally possible.

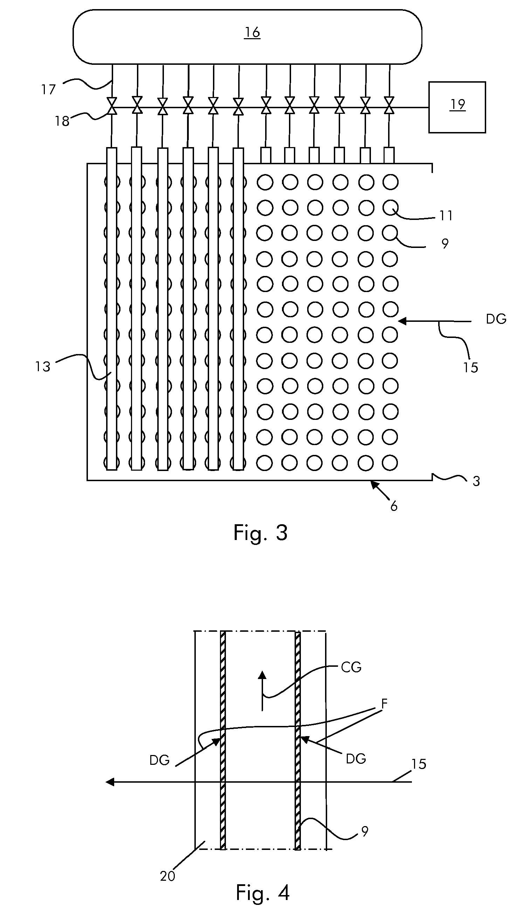

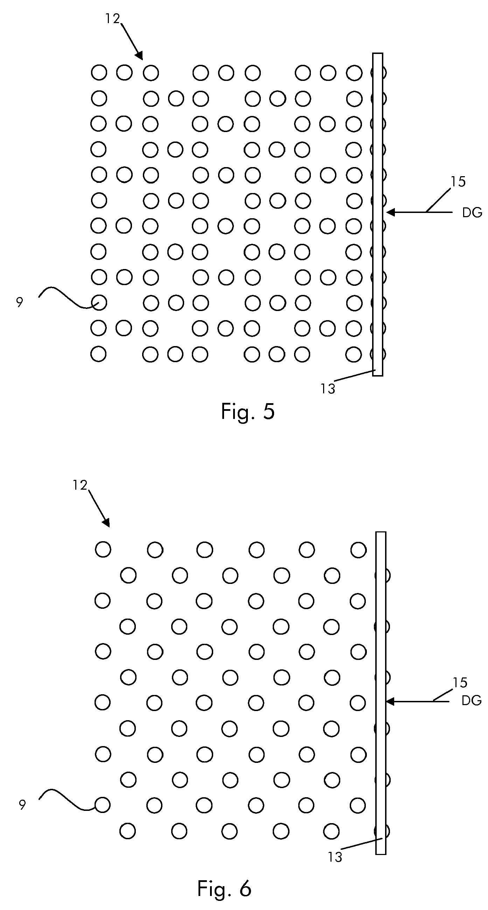

In the first chamber 2 a number of filter bags 9 are housed; these filter bags 9 have one end connected to the internal wall 7 and project in the first chamber 2. The filter bags 9 are advantageously aligned in a matrix configuration, as shown for example in figure 3; naturally other configurations are possible, e.g some possible configurations are shown in figures 5-7.

In addition, the filter bags 9 preferably have a cylindrical shape, with a closed end 10 and an open mouth 11 at the opposite end. The mouths 11 open in the second chamber 4. The filter bags 9 can have different shapes (i.e. cross section), e.g. round, oval, star-shaped, pleated cartridge.

The filter bags 9 define one or more bag nests 12.

In order to clean the filter bags 9, manifolds 13 with nozzles 14 facing the mouths 11 are provided. The manifolds 13 are housed in the second chamber 4 and are advantageously parallel to one another.

During operation a dirty gas DG to be treated in the fabric filter 1 flows through the first chamber 2 and bags 9.

The dirty gas DG enters the bag nest 12 along a flow direction 15.

For example, the inlet 3 and/or inlet position and/or first chamber configuration can define the flow direction 15. For example, the flow direction 15 can be a direction perpendicular to the inlet 3 and/or parallel to walls of the first chamber 2. Other examples are possible.

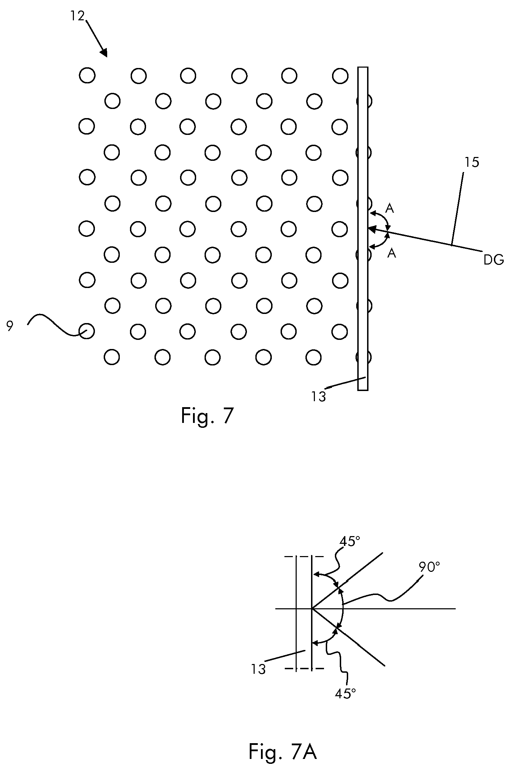

Advantageously, angles A bigger than 45 degree are defined between the manifold 13 and the flow direction 15 (figure 7); therefore the flow direction 15 is included in a cone having axis perpendicular to the manifold 13 and angle at the apex being 90 degree (figure 7A); preferably, the manifolds 13 extend perpendicular (more preferably substantially perpendicular, i.e. the angle A could be e.g. bigger than 80 degree and preferably bigger than 85 or 88 degree) to the flow direction 15 (figures 5 and 6).

In a preferred embodiment, the manifolds 13 are parallel to one another and are connected to a pressure tank 16 via pipes 17; in addition, valves 18 are connected to each manifold 13 to regulate the flow through that manifold.

A control unit 19 is also preferably provided in order to selectively control the valves 18.

The operation of the fabric filter is apparent from that described and illustrated and is substantially the following.

Dirty gas DG enters the first chamber of the fabric filter along the direction 15. The dirty gas DG draws dust and solid particles that have to be removed. While moving through the first chamber 2, the dirty gas DG enters (arrow F) the filter bags 9 and deposits the dust and solid particles on the filter bags 9 (namely on the outer surface of the filter bags 9); the dust and solid particles generate a dust cake 20 on the outside surface of the filter bags 9.

Thus clean gas CG enters the second chamber 4 via the mouths 11 and clean gas CG moves out of the fabric filter via the outlet 5.

When the filter bags have to be cleaned, pressurized gas (e.g. compressed air having a pressure of 0.5 bar or less to 8 bar or more) is sent from the pressure tank 16, via a pipe 17 and the respective valves 18, to a manifold 13 (usually only one manifold but also more is possible); compressed air F2 (typically pulses of compressed air) is thus injected via the nozzles 14 into the filter bags 9. Since the manifolds 13 extend perpendicular to or substantially perpendicular to or with the required angle A respect to the flow direction 15, filter bags 9 that are arranged substantially perpendicular to the flow direction 15 are cleaned.

Therefore the cleaning event does not cause a row of filters to be cleaned parallel to the flow direction 15, with a consequent velocity increase. In contrast, the flow velocity of the dirty gas is substantially not affected from the cleaning event and, even if affected, all the flow over the whole cross section of the first chamber (i.e. all the flow parallel to the flow direction 15) is affected in substantially the same way, such that localized velocity increase does not occur.

In addition, the lifetime of the filter bags can be optimized and filter bags 9 can be used for longer time. In fact, the filter bags 9 closer to the inlet 3 get dirty and need cleaning more often than filter bags 9 farther from the inlet 3. Since the fabric filter 1 of the invention allows cleaning of filter bags 9 having the same distance from the inlet 3, filter bags 9 closer to the inlet 3 can be cleaned more often than filter bags 9 farther from the inlet 3. This way the number of cleaning events can be reduced and the possible damages consequent to cleaning events is reduced as well.

In addition, the filter bags 9 of the first and possibly second row can be not cleaned, in order to not remove the protective dust cake from around them. This way the possible severe damages of the first and possibly second rows of filter bags can be counteracted.

Advantageously, a reduction of the emissions is also possible. In fact, the dust cake helps filtering in particular the fine dust. Removal of the dust cake thus has as a consequence an increase of the fine dust emission, until the dust cake is formed again. Since according to the invention the cleaning events of the filter bags can be optimized according to the distance of the filter bags row from the inlet 3 (in particular the cleaning events can be reduced e.g. for filter bags row farther from the inlet), the emission (in particular emissions of fine dust) can be reduced.

The present invention also refers to a method for cleaning a fabric filter 1.

The method includes simultaneously injecting gas into filter bags 9 aligned over an axis defining angles A bigger than 45 degree with respect to a flow direction 15 of a dirty gas DG and preferably over an axis substantially perpendicular to a flow direction 15 of the dirty gas DG. The flow direction 15 is a direction along which during operation the dirty gas DG to be treated in the fabric filter 1 enters a bag nest 12 of the fabric filter 1. The axis is advantageously a longitudinal axis of the manifolds 13 or an axis parallel thereto.

Naturally the features described may be independently provided from one another.

## Claims

1. A fabric filter (1) comprising:
a first chamber (2) with an inlet (3);
a second chamber (4) with an outlet (5);
filter bags (9) housed in the first chamber (2) and having mouths (11) that open in the second chamber (4), the filter bags (9) defining at least a bag nest (12);
manifolds (13) with nozzles (14) facing the mouths (11), the manifolds (13) being housed in the second chamber (4); and
a flow direction (15) along which during operation a dirty gas to be treated in the fabric filter (1) enters the bag nest (34),
wherein
angles between the manifolds (13) and the flow direction (15) are bigger than 45 degree.

2. The fabric filter (1) of claim 1, wherein the manifolds (13) extend substantially perpendicular to the flow direction (15).

3. The fabric filter (1) of claim 1, wherein the filter bags (9) are aligned in a matrix configuration.

4. The fabric filter (1) of claim 1, wherein
the manifolds (13) are connected to a pressure tank (16),
at least a valve is connected to each manifold (13) to regulate a flow through that manifold (13),
a control unit (19) is provided to selectively control the valves (18).

5. The fabric filter (1) of any one of claims 1 to 4, wherein the flow direction (15) is defined by the first chamber (2) configuration.

6. The fabric filter (1) of claim 5, wherein the flow direction (15) is further defined by the inlet (3) and/or inlet position.

7. The fabric filter (1) of any one of claims 1 to 4, wherein the flow direction (15) is a direction perpendicular to the inlet (3) and/or parallel to walls of the first chamber (2).

8. A method for cleaning a fabric filter (1) comprising simultaneously injecting gas into filter bags (9) aligned over an axis defining angles bigger than 45 degree with respect to a flow direction (15) of a dirty gas, the flow direction (15) being a direction (15) along which during operation the dirty gas to be treated in the fabric filter (1) enters a bag nest (12) of the fabric filter (1).

9. The method of claim 8, wherein the filter bags (9) are aligned over an axis substantially perpendicular to the flow direction (15).

10. The method of claim 8, wherein the fabric filter (1) is a fabric filter (1) according to Claim 1.
